# EUROPÄISCHE PATENTSCHRIFT

(11) **EP 1 511 651 B1**
(45) Veröffentlichungstag und Bekanntmachung des Hinweises auf die Patenterteilung: **02.11.2006**
(21) Anmeldenummer: 03722553.9
(22) Anmeldetag: 26.04.2003
(51) Int. Cl.: B60N 2/56, B60H 1/00

(54) **LUFTVERSORGUNGSEINRICHTUNG FUER EINEN FAHRZEUGSITZ**
AIR SUPPLYING DEVICE FOR A VEHICLE SEAT
DISPOSITIF D'ALIMENTATION EN AIR DESTINE A UN SIEGE DE VEHICULE

(30) Priorität: 12.06.2002 DE 10226008
(43) Veröffentlichungstag der Anmeldung: 09.03.2005
(73) Patentinhaber: DaimlerChrysler AG, 70567 Stuttgart (DE)
(72) Erfinder: BARGHEER, Claudio, 71088 Holzgerlingen (DE); PFAHLER, Karl, 70180 Stuttgart (DE); RENNER, Lothar, 71154 Nufringen (DE); HARTMANN, Dietmar, 75392 Deckenpfronn (DE)
(86) Internationale Anmeldenummer: PCT/EP2003/004382
(87) Internationale Veröffentlichungsnummer: WO 2003/106215

(56) Entgegenhaltungen:
- EP-A- 1 203 681
- DE-A- 19 910 390

## Beschreibung

Die Erfindung betrifft eine Luftversorgungseinrichtung für einen Fahrzeugsitz eines offenen Kraftwagens nach dem Oberbegriff des Patentanspruchs 1.

Eine solche ist aus der EP 1 203 681 A2 bekannt. Dort ist eine Windschutzeinrichtung gezeigt, die eine von der Fahrgeschwindigkeit abhängige Regelung aufweist.

Aus der DE 92 01 474 U1 ist eine solche Luftversorgungseinrichtung mit wenigstens einer im oberen Bereich des Fahrzeugsitzes vorgesehenen Luftausströmöffnung entnehmbar, über welche der Kopf-, Schulter und Nackenbereich des Sitzinsassen zur Verminderung von unerwünschten Zuglufterscheinungen mit einem Luftstrom beaufschlagbar ist. Die Luftversorgungseinrichtung wird dabei mit Luft beschickt, die beim Fahren über Einströmquerschnitte aufgefangen und durch Leitungen und Kanäle mittels Staudruck oder eines Gebläses zur Luftausströmöffnung gefördert wird.

Aufgabe der Erfindung ist die Schaffung einer Luftversorgungseinrichtung der eingangs genannten Art mit verbessertem Komfort für den Sitzinsassen beim offenen Fahren.

Diese Aufgabe wird erfindungsgemäß durch eine Luftversorgungseinrichtung mit den Merkmalen des Patentanspruchs 1 gelöst. Vorteilhafte Ausgestaltungen der Erfindung sind in den Unteransprüchen angegeben.

Erfindungsgemäß wird der Luftstrom nach dem Einschalten der Luftversorgungseinrichtung mittels der Steuereinrichtung in Abhängigkeit der Außentemperatur oder eines manuell gewählten Vorgabewertes auf einen Grundwert eingestellt. Aufgrund der Außentemperatur wird der Luftstrom auf eine zugeordnete Temperatur und Intensität abgestimmt. Dies erfolgt insbesondere über eine Steuerung der Heizleistung eines Heizelementes und der Drehzahl eines Gebläses. Unter dem vom Sitzinsassen wählbaren Vorgabewert ist insbesondere das Einstellen eines Wertes über eine Regelungseinrichtung im Innenraum des Kraftwagens zu verstehen. Hierdurch wird ein Grundwert entweder automatisch oder abhängig vom Sitzinsassen eingestellt, der auf komfortable und einfache Weise an eine sich ändernde Außentemperatur angepaßt wird. Die weitere Einstellung des Luftstroms ausgehend von besagtem Grundwert erfolgt dann in Abhängigkeit der Fahrgeschwindigkeit des Kraftwagens, welche sich im Fahrbetrieb des Kraftwagens sehr häufig ändert, wodurch eine permanente Anpassung beispielsweise der Intensität oder Wärme des Luftstroms erforderlich sein kann.

Bewährt hat sich beispielsweise die Einstufung des Grundwertes des Luftstroms in drei Leistungsstufen, von denen die optimale vom Sitzinsassen ausgewählt werden kann.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine schematische Seitenansicht auf einen offenen Kraftwagen mit einem Fahrzeugsitz mit zugeordneter Luftversorgungseinrichtung nach der Erfindung;
- Fig. 2: eine schematische Perspektivansicht auf Teile der Rückenlehne des Fahrzeugsitzes, in welche die Luftversorgungseinrichtung integriert ist;
- Fig. 3: eine schematische Schnittansicht auf die Kopfstütze eines Fahrzeugsitzes, in welche die Luftversorgungseinrichtung integriert ist; und in
- Fig. 4: ein Diagramm, in welchem der Luftstrom mit der Lüfterdrehzahl des Gebläses und der Heizleistung des Heizelementes abhängig von der Fahrgeschwindigkeit des Kraftwagens dargestellt sind.

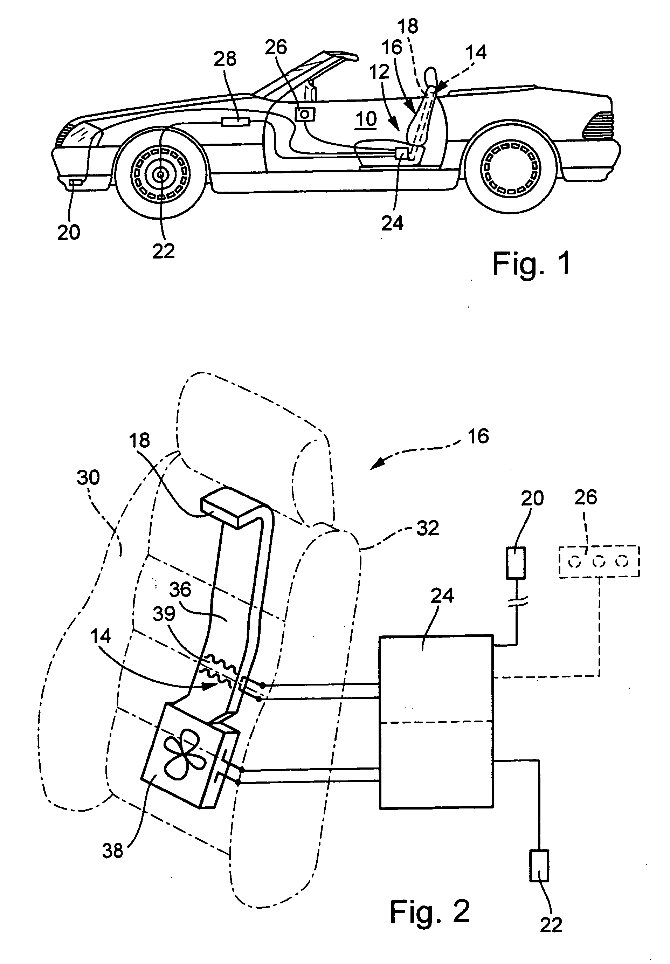

In Fig.1 ist in schematischer Seitenansicht ein offener Kraftwagen dargestellt, in dessen Fahrgastzelle 10 eine Sitzreihe mit zwei Fahrzeugsitzen 12 angeordnet ist. In die beiden Fahrzeugsitze 12 ist jeweils eine in Fig.1 lediglich schematisch angedeutete und im weiteren unter Bezugnahme auf die weiteren Figuren noch näher erläuterte Luftversorgungseinrichtung 14 integriert, wobei auf Höhe des oberen Bereichs der Rückenlehne 16 des Sitzes 12 eine Luftausströmöffnung 18 der Luftversorgungseinrichtung 14 erkennbar ist. Über diese Luftausströmöffnung 18 ist der Kopf-, Schulter und Nackenbereich des Sitzinsassen auf im weiteren noch erläuterte Weise zur Verminderung von unerwünschten Zuglufterscheinungen mit einem regelbaren Luftstrom versorgbar.

Die Luftversorgungseinrichtung 14 ist hier sowohl mit einem Sensor 20 zum Erfassen der Außentemperatur wie auch mit einem Sensor 22 zum Erfassen der Fahrgeschwindigkeit verbunden. Die beiden Sensoren 20,22 sind mit einer beispielsweise innerhalb des jeweiligen Sitzes 12 angeordneten Steuereinrichtung 24 verbunden, über welche die Regelung des aus der Luftausströmöffnung 18 austretenden Luftstroms auf im weiteren noch beschriebene Weise erfolgt. Zudem ist im Innenraum des Kraftwagens eine Regelungseinrichtung 26 vorgesehen, welche mit der Steuereinrichtung 24 verbunden ist und über welche der Sitzinsasse eine nachfolgend noch beschriebene manuelle Einstellung des Luftstroms vornehmen kann. Das Erfassen der Fahrgeschwindigkeit erfolgt in dem hier gezeigten Ausführungsbeispiel durch ein ohnehin vorhandenes ABS-Steuergerät 28, welches die momentane Fahrgeschwindigkeit in ein elektronisches Signal umwandelt und an die Steuereinrichtung 24 übermittelt. Das Erfassen der Außentemperatur kann durch einen ohnehin vorhandenen Temperatursensor 20 zum Anzeigen der Temperatur im Cockpit erfolgen, wobei die Temperatur in ein elektronisches Signal umgewandelt und an die Steuereinrichtung 24 im Sitz 12 übermittelt wird.

In Fig.2 sind in schematischer Perspektivansicht Teile der Rückenlehne 16 des Sitzes 12 gemäß Fig.1 dargestellt, in welche die Luftversorgungseinrichtung 14 integriert ist. Von der Rückenlehne 16 des Sitzes 12 sind ein Lehnenrahmen 30 und eine rückwärtige Verkleidung 32 erkennbar. Innerhalb der Rückenlehne 16 ist eine Kanalanordnung 36 der Luftversorgungseinrichtung 14 angeordnet. Der Kanalanordnung 36 ist ein von einem Gehäuse aufgenommenes Gebläse 38 vorgeschaltet, dessen Luftansaugung an der Rückseite der Rückenlehne 16 erfolgt. Außerdem ist innerhalb der Kanalanordnung 36 ein dem Gebläse 38 nachgeschaltetes Heizelement 39 angeordnet, welches über die Steuereinrichtung 24 steuerbar ist und mit welchem der Luftstrom der Luftversorgungseinrichtung 14 temperiert werden kann. Im Bereich der in Fig.2 nicht gezeigten Kopfstütze mündet die Kanalanordnung 36 in die Luftausströmöffnung 18, durch die der temperierte Luftstrom in Richtung des Kopf-, Schulter und Nackenbereich des Sitzinsassen austritt, um die beim Fahren mit offenem Verdeck entstehenden Zuglufterscheinungen erheblich zu vermindern. Die Luftausströmöffnung 18 endet etwa flächenbündig integriert an der Vorderseite der Kopfstütze.

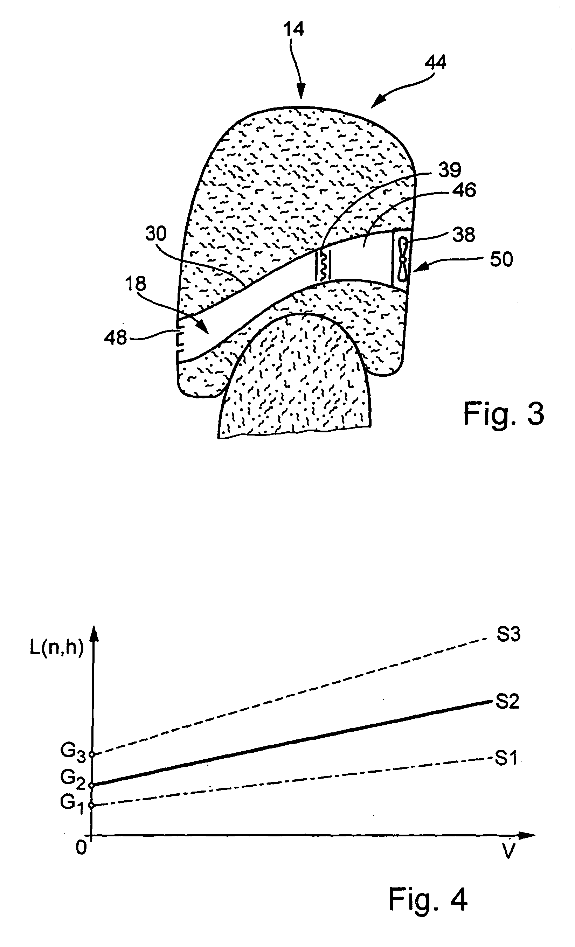

Eingangsseitig wird von der Steuereinrichtung 24 der vom Außentemperatursensor 20 automatisch erfasste äußere Parameterwert und/oder der von der Regelungseinrichtung 26 übermittelte Vorgabewert erfasst. Der äußere Parameterwert und/oder der Vorgabewert dienen hier - wie aus Fig.4 ersichtlich - zur Einstellung eines niedrigen, mittleren oder hohen Grundwertes G1-G3 des Luftstroms L. Dieser Grundwert G1-G3 des Luftstroms L ist bestimmt durch eine zugeordnete Lüfterdrehzahl n des Gebläses 38 und eine zugeordnete Heizleistung h des Heizelementes 39. Mittels der hier gestrichelt angedeuteten Regelungseinrichtung 26 kann der Sitzinsasse ebenfalls einen entsprechenden Grundwert G1-G3 einstellen, beispielsweise falls keine automatische Einstellung mittels des äußeren Vorgabewertes vorgesehen ist oder falls dem Sitzinsassen der mittels des äußeren Vorgabewertes voreingestellte Luftstrom L zu niedrig oder zu hoch ist.

Wie aus der Zusammenschau der Figuren 2 und 4 erkennbar, erfolgt die weitere Einstellung des Luftstroms L (Fig.4) ausgehend von dem oben beschriebenen Grundwert G1-G3 in Abhängigkeit der Fahrgeschwindigkeit V, welche durch den Sensor 22 automatisch erfasst wird. Ausgehend von den Grundwerten G1-G3 erfolgt demgemäss die weitere Einstellung des Luftstromes L entlang der Steuerlinien S1-S3. Da bei steigender Fahrgeschwindigkeit V die Turbulenzen im Kopf- und Nackenbereich des Fahrgastes stärker werden, wird - wie aus Fig.4 ersichtlich -der Luftstrom L ausgehend vom eingestellten Grundwert G1-G3 dementsprechend erhöht, indem das Gebläse 38 durch eine steigende Lüfterdrehzahl mehr Luft fördert und entsprechend der mehr geförderten Luft auch die Heizleistung des Heizelements 39 durch die Steuereinrichtung 24 erhöht wird. Demgemäss wird die Heizleistung des Heizelements 39 bei sinkender Fahrgeschwindigkeit durch die Steuereinrichtung 24 vermindert. Entsprechend der Steuerlinien S1-S3 erfolgt hier mit steigender Fahrgeschwindigkeit ein linearer Anstieg des Luftstroms L. Gleichfalls wäre ein nichtlinearer Anstieg und dementsprechend ein gekrümmter Verlauf der Steuerlinien S1-S3 denkbar. Auch werden bei einer Veränderung der Außentemperatur die Lüferdrehzahl oder die Heizleistung, oder aber beide Werte zu verändert. In regelmäßigen Abständen wird innerhalb der Steuereinrichtung 24 der mittels des Außentemperatursensors 20 automatisch erfasste äußere Parameterwert und ggf. der von der Regelungseinrichtung 26 übermittelte Vorgabewertes überprüft. Falls sich die Außentemperatur über einen bestimmten Wert hinaus ändert, wird über die Steuereinrichtung 24 ein anderer Grundwert G1-G3 des Luftstroms L eingestellt. Natürlich ist in diesem Zusammenhang eine Unterteilung in mehr als drei Grundwerte denkbar.

In Fig.3 ist in schematischer Schnittansicht die Kopfstütze 44 eines Fahrzeugsitzes dargestellt, in welche die Luftversorgungseinrichtung 14 gemäß einer weiteren Ausführungsform integriert ist. Die Luftversorgungseinrichtung 14 umfasst einen von der Vorderseite bis zur Rückseite der Kopfstütze 44 durchgängigen Rohrkanal 46, der in Fahrzeuglängsrichtung und in einem unteren Bereich der Kopfstütze 44 verläuft. Der Rohrkanal 46 ist vorzugsweise aus einem weichen Kunststoff oder aus Gummi hergestellt. Ein hinterer Teil des Rohrkanals 46 bildet dabei einen Lufteinlass 50 saugseitig des hier als Axiallüfter ausgebildeten Gebläses 38 und ein vorderer Teil des Rohrkanals 46 mündet an der Vorderseite der Kopfstütze 44 im Bereich der Luftausströmöffnung 18. Etwa in der Mitte der Kopfstütze 44 ist innerhalb des Rohrkanals 46 das Heizelement 39 angeordnet. Um die Warmluft optimal an den Kopf-, Nacken und Schulterbereichs des Sitzinsassen zu leiten, ist im Bereich der Auslassöffnung 18 des Luftauslasskanals 46 eine Luftleiteinrichtung mit einer Mehrzahl von einstellbaren Luftleitschaufeln 48 angeordnet. Die Regelung des Luftstroms L erfolgt mittels der Steuereinrichtung 24 in zum ersten Ausführungsbeispiel identischer Weise über die Lüfterdrehzahl n des Gebläses 38 und die jeweils zugeordnete Heizleistung h des Heizelementes 39, und zwar wiederum in Abhängigkeit der Außentemperatur bzw. der Fahrgeschwindigkeit. Die Steuereinrichtung 24 ist in Fig.3 nicht gezeigt, da die Steuerung des Heizelementes 39 und des Gebläses 38 mit dem ersten Ausführungsbeispiel identisch ist.

## Patentansprüche

1. Fahrzeugsitz für einen offenen Kraftwagen mit einer Luftversorgungseinrichtung (14), die ein Gebläse (38) und eine Steuereinrichtung (24) aufweist, und mit wenigstens einer im oberen Bereich des Fahrzeugsitzes (12) vorgesehenen Luftausströmöffnung (18) der Luftversorgungseinrichtung (14), über welche der Kopf-, Schulter und Nackenbereich des Sitzinsassen zur Verminderung von unerwünschten Zuglufterscheinungen mit einem mittels des Gebläses (38) erzeugten Luftstrom (L) beaufschlagbar ist, und wobei der Luftstrom (L) mittels der Steuereinrichtung (24) regelbar ist,
**dadurch gekennzeichnet,**
**dass** bei eingeschaltetem Gebläse (38) der Luftstrom (L) mittels der Steuereinrichtung (24) in Abhängigkeit eines vom Sitzinsassen wählbaren Vorgabewertes oder der Außentemperatur auf einen zugeordneten Grundwert (G1-G3) eingestellt wird, von dem aus die weitere Einstellung des Luftstroms (L) in Abhängigkeit der Fahrgeschwindigkeit des Kraftwagens erfolgt, wobei die Steuereinrichtung (24) den Grundwert (G1-G3) ändert, falls sich die Außentemperatur über einen bestimmten Wert hinaus ändert.

2. Fahrzeugsitz nach Anspruch 1,
**dadurch gekennzeichnet,**
**dass** der Grundwert (G1-G3) des Luftstroms (L) durch eine zugeordnete Lüfterdrehzahl (n) des Gebläses (38) und eine zugeordnete Heizleistung (h) eines Heizelementes (39) bestimmt ist.

3. Fahrzeugsitz nach Anspruch 1,
**dadurch gekennzeichnet,**
**dass** bei der weiteren Einstellung des Luftstroms (L) die Lüfterdrehzahl (n) eines Gebläses (38) in Abhängigkeit der Fahrgeschwindigkeit des Kraftwagens einstellbar ist.

## Claims

1. Vehicle seat for an open-top motor vehicle, with an air supplying system (14) comprising a fan (38) and a control unit (24), and with at least one air outflow opening (18) of the air supplying device (14) provided in the upper area of the vehicle seat (12), through which the head, shoulder and neck area of the seat's occupant can be acted upon by an air flow (L) produced by the fan (38) in order to reduce undesired draught phenomena, the air flow (L) being regulated by the control unit (24),
**characterised in that**
when the fan (38) is switched on the air flow (L) is adjusted to an associated basic value (G1-G3) by the control unit (24) as a function of a set value that can be selected by the seat's occupant or of the external temperature, from which basic value the air flow (L) is adjusted further as a function of the driving speed of the vehicle, and the control unit (24) changes the basic value (G1-G3) if the external temperature changes beyond a certain amount.

2. Vehicle seat according to Claim 1,
**characterised in that**
the basic value (G1-G3) of the air flow (L) is determined by an associated impeller speed (n) of the fan (38) and an associated heating power (h) of a heating element (39).

3. Vehicle seat according to Claim 1,
**characterised in that**
for the further adjustment of the air flow (L), the impeller speed (n) of a fan (38) can be adjusted as a function of the driving speed of the motor vehicle.

## Revendications

1. Siège de véhicule pour une automobile découverte avec un dispositif d'alimentation en air (14) qui présente une soufflante (38) et un dispositif de commande (24) et avec au moins un orifice d'évacuation d'air (18) du dispositif d'alimentation en air (14) prévu dans la zone supérieure du siège du véhicule (12), via lequel la zone de la tête, des épaules et de la nuque de la personne assise sur le siège peut recevoir un flux d'air (L) généré au moyen de la soufflante (38) pour réduire des courants d'air non voulus et le flux d'air (L) pouvant être réglé au moyen du dispositif de commande (24), **caractérisé en ce que**, lorsque la soufflante (38) est connectée, le flux d'air (L) est réglé au moyen du dispositif de commande (24) sur une valeur de base affectée (G1-G3) en fonction d'une valeur prescrite pouvant être choisie par la personne occupant le siège ou de la température extérieure, valeur à partir de laquelle la suite du réglage du flux d'air (L) a lieu en fonction de la vitesse de l'automobile, le dispositif de commande (24) modifiant la valeur de base (G1-G3) si la température extérieure change au-delà d'une valeur déterminée.

2. Siège de véhicule selon la revendication 1, **caractérisé en ce que** la valeur de base (G1-G3) du flux d'air (L) est déterminée par une vitesse de rotation affectée du ventilateur (n) de la soufflante (38) et par une puissance de chauffage affectée (h) d'un élément chauffant (39).

3. Siège de véhicule selon la revendication 1, **caractérisé en ce que**, lors de la suite du réglage du flux d'air (L), la vitesse de rotation du ventilateur (n) d'une soufflante (38) est réglable en fonction de la vitesse de l'automobile.
